# EUROPEAN PATENT SPECIFICATION

(11) **EP 3 489 065 B1**
(45) Date of publication and mention of the grant of the patent: **02.11.2022**
(21) Application number: 18208982.1
(22) Date of filing: 28.11.2018
(51) Int. Cl.: B60K 25/02

(54) **ENERGY GENERATION SYSTEM FOR A VEHICLE**
ENERGIEERZEUGUNGSSYSTEM FÜR EIN FAHRZEUG
SYSTÈME DE PRODUCTION D'ÉNERGIE POUR VÉHICULE

(30) Priority: 28.11.2017 IT 201700136672
(43) Date of publication of application: 29.05.2019
(73) Proprietor: IVECO FRANCE S.A.S., 69200 Vénissieux (FR)
(72) Inventor: CODRON, Stephane, 69008 Lyon (FR)
(74) Representative: Bongiovanni, Simone

(56) References cited:
- GB-A- 2 462 325
- GB-A- 2 543 043
- US-A- 4 222 450
- US-A1- 2004 262 062
- US-A1- 2006 030 450
- US-A1- 2009 000 836
- US-A1- 2009 095 549

## Description

### TECHNICAL FIELD

The present invention concerns an energy generation system, particularly an energy generation system for a public passenger transport vehicle.

### BACKGROUND ART

Electronic devices are increasingly present on vehicles and the demand for generating electrical power to power them is increasing as a result.

In order to generate said electrical current, at least one alternator is normally used, which is arranged near the vehicle's engine and which converts a portion of the rotational energy of the crankshaft into electrical energy.

Over time, in order to increase the said energy generation, the number of alternators has been increased so as to be up to three alternators per vehicle. Since it was insufficient, the power of each individual alternator has been increased from 90 A to 120-150 A.

Several problems have emerged.

Alternators occupy a significant amount of space and thus, by increasing their number and/or power, overcrowding around the engine has increased. This reduces the room available for other components.

In addition, a vehicle normally has two alternators which are positioned in opposition with respect to the vertical axis of symmetry of the engine in order to balance the forces on the crankshaft. If a vehicle has three alternators, two are positioned on one side of the engine and the remaining one on the opposite side; the ratio of the weights supported by the engine is thus destabilised because the forces acting on one side and on the other are unequal.

In addition, since the alternator pulley must be mechanically coupled with the crankshaft, the alternators must be positioned close to the engine. However, the temperature is very high (90-105 °C) in the vicinity of the engine as a result of the combustion which occurs inside the engine; the ideal efficiency of the alternators is at 25 °C and becomes much worse at high temperatures.

The increase in power required to compensate for the loss of efficiency due to high temperatures requires the use of cables with a large cross-section and oversized belts to transmit the necessary torque.

Finally, energy recovery during deceleration phases can only be achieved with idler pulley systems (BSG tensioners), which also take up a lot of space around the engine.

Examples of known energy recovery arrangements are disclosed for instance in documents US2009/095549 A1, GB2543043 A, US4222450A, GB2462325 A, US2004/262062 A1 or US2006/0030450 A1.

US2009/000836A1 A discloses a drive assembly which can apply a pure torque to a driven member while allowing for limited motion of the driven member in the radial direction. This drive assembly is particularly suitable for converting an Internal Combustion (IC) vehicle to an IC-electric hybrid vehicle comprising installation of two electric motors coupled to a drive shaft of the vehicle via the drive of this invention such that the electric motors can provide some or all of the mechanical power required to propel the vehicle while accepting some relative motion between the existing vehicle drive shafts and the chassis and imposing minimal radial force on the drive shaft.

It is thus still necessary to improve energy generation systems in order to increase the electrical energy produced without however increasing the space requirements in vehicles.

### DISCLOSURE OF INVENTION

The invention aims to solve the above-mentioned problems in a simple and cost-effective way.

The above-mentioned objects are achieved by an electrical power generation system according to Claim 1.

### BRIEF DESCRIPTION OF THE DRAWINGS

Other characteristics and benefits of the invention will become apparent from the following non-limiting description, provided for illustrative purposes, with reference to the attached drawings wherein:
- Figure 1 is a plan view, with parts removed for clarity, of a vehicle comprising a system according to the invention;
- Figure 2 is a cross-section view, with parts removed for clarity, of the system according to the invention; and
- Figure 3 is a plan view, with parts removed for clarity, of the system of Figure 2.

### BEST MODE FOR CARRYING OUT THE INVENTION

The present description refers to a bus, however it could be applied to any vehicle, for example a truck or lorry.

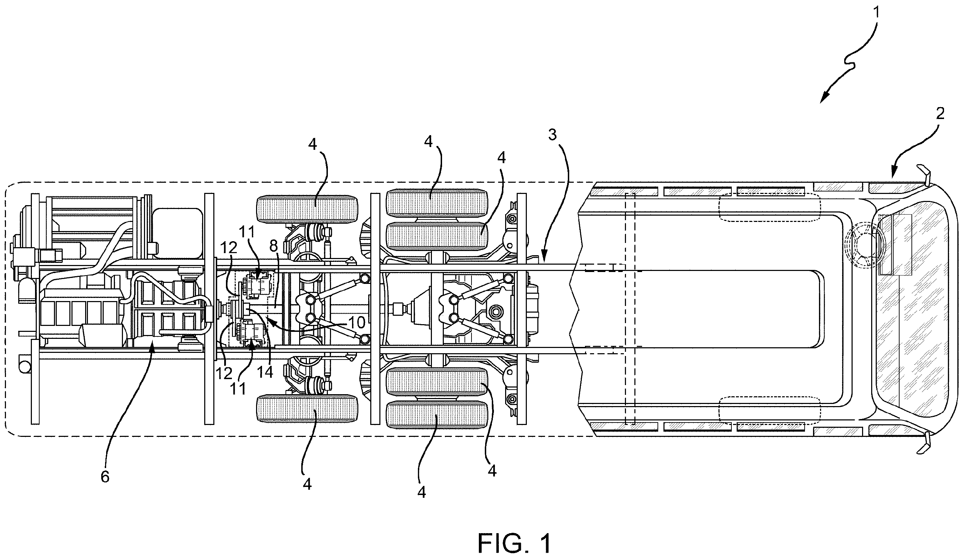

Figure 1 schematically illustrates the frame 3 of a public passenger transport vehicle 1, essentially comprising at least one pair of driving wheels 4, preferably rear wheels, supported by the frame 3 and free to roll relative to the latter. The vehicle 1 further comprises an engine 6 mechanically coupled to the wheels 4 in order to provide them with drive torque by means of a transmission shaft 8, in a known manner.

According to the present invention, the vehicle 1 comprises a generation system 10 configured to produce electrical energy by using the rotational energy of the transmission shaft 8. The generation system 10 is directly coupled to the transmission shaft 8 downstream of the engine 6 and upstream of the wheels 4, more precisely it is positioned outside the engine compartment along the axis of the transmission shaft 8.

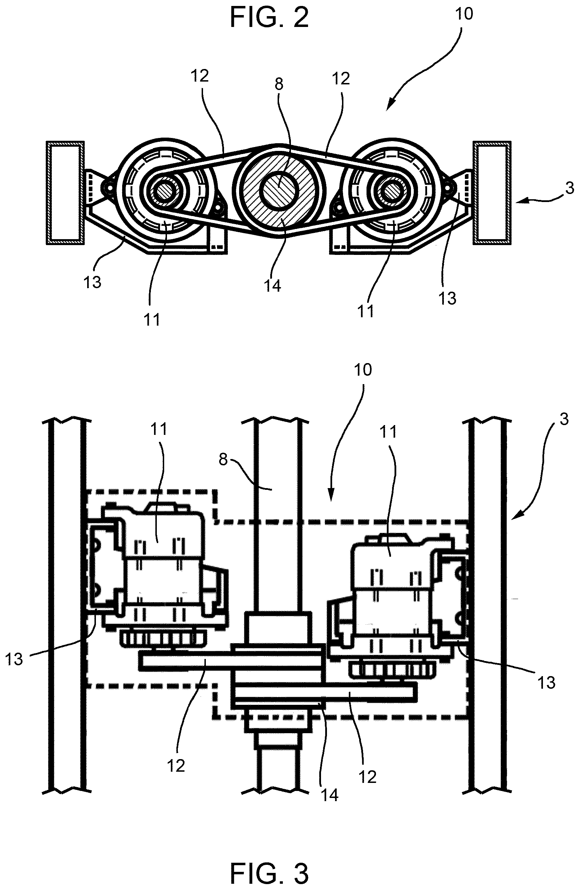

In more detail (Figures 2 and 3), the generation system 10 comprises at least two alternators 11 attached to the frame 3 of the vehicle 1 whose respective pulleys are mechanically coupled with the transmission shaft 8.

The at least two alternators 11 are beneficially attached to the opposite sides with respect to the transmission shaft 8, more precisely symmetrically with respect to the axis of the transmission shaft 8 in order to minimise the tilting moments acting on the transmission shaft 8 due to the mechanical coupling with the at least two alternators 11.

For this reason, the number of alternators 11 is a multiple of two. In the present description, there are two alternators.

The at least two alternators 11 are each mechanically coupled to the transmission shaft 8 by means of a coupling system with a fixed transmission ratio.

The aforesaid mechanical coupling is preferably a belt drive 12. Advantageously, the belt drive 12 is a toothed belt drive implemented between the pulley of the alternators 11 and a sleeve 14 attached around the shaft 8 and of a diameter such that it establishes a pre-set transmission ratio with the pulley of the alternators 11.

The alternators 11 are preferably attached to the frame by a bracket 13.

The generation system 10, or alternatively the alternators 11, may comprise a cover (not shown) configured to prevent contamination of the alternators 11 and the belt drive 12 from, for example, water or dirt.

From the above, the benefits of a vehicle 1 with an energy generation system 10 according to the present invention are very clear.

Since the alternators 11 are no longer attached to the housing of the engine 6, there is more space in the engine compartment for the other auxiliary devices to be installed.

Furthermore, the problem of destabilising the ratio of the weights supported by the engine no longer exists.

The efficiency of the alternators 11 is improved since their working temperature is lower with respect to the temperature in the vicinity of the engine 6. As a result, lower/standard power alternators can be used which take up less room.

By using standard power alternators, the cable cross-section and belt size can be reduced.

Furthermore, since the alternators are installed downstream of the engine 6 and upstream of the wheels 4, i.e. downstream of the gearbox retarder, it is possible to recover more energy at idle. Indeed, the torque is that which comes directly from the wheels 4. Heat losses due to the gearbox retarder as well as mechanical losses of the gearbox have no effect on the amount of energy recovered by the system of alternators 11.

Finally, it is clear that the vehicle 1 comprising an energy generation system 10 according to the present invention may be subject to modifications and variations without thereby departing from the protective scope defined by the Claims.

For example, there may be four or six alternators 11 positioned symmetrically with respect to the axis of the transmission shaft 8.

## Claims

1. A vehicle (1) comprising an engine (6), a frame (3) and at least one pair of driving wheels (4) supported by the frame (3) and mechanically coupled by means of a transmission shaft (8) to said engine (6), said vehicle (1) comprising an energy generation system (10) mechanically coupled to said transmission shaft (8) for generating electrical energy by using the rotational energy of said transmission shaft (8),
wherein said energy generation system (10) comprises at least two alternators (11),
wherein said alternators (11) are coupled directly to said transmission shaft (8) by means of a coupling system which has a fixed transmission ratio between the transmission shaft (8) and a pulley of said alternators (11),
wherein said coupling system is a belt drive (12), **characterised in that** each said alternator (11) is attached to said frame by a bracket (13), wherein said bracket (13) supports said alternator (11) in three points spaced apart one from the other, preventing rotational movement of the motor with respect to bracket and the frame.

2. The vehicle according to Claim 1, wherein said energy generation system (10) is arranged downstream of the engine (6) and upstream of said pair of wheels (4).

3. The vehicle according to Claim 1 or 2, wherein said alternators (11) are arranged in a symmetric manner with respect to an axis of said transmission shaft (8).

4. The vehicle according to Claim 1, 2 or 3, wherein the number of said alternators (11) is a multiple of two.

5. The vehicle according to any one of the preceding claims, wherein said belt drive (12) is a toothed belt drive implemented between the pulley of said alternators (11) and a sleeve (14) attached around said transmission shaft (8) and of a diameter such that it establishes a pre-set transmission ratio with the pulley of said alternators (11).

6. The vehicle according to any one of the preceding claims, wherein said generation system (10) comprises a cover configured to prevent contamination of said alternators (11) and said belt drive (12).

## Patentansprüche

1. Ein Fahrzeug (1) umfassend einen Motor (6), einen Rahmen (3) und zumindest ein Paar Antriebsräder (4), die durch den Rahmen (3) gelagert und mechanisch über eine Antriebswelle (8) mit dem Motor (6) gekoppelt sind,
wobei das Fahrzeug (1) ein mit der Antriebswelle (8) mechanisch gekoppeltes Energieerzeugungssystem (10) zur Erzeugung elektrischer Energie durch Nutzung der Rotationsenergie der Antriebswelle (8) umfasst,
wobei das Energieerzeugungssystem (10) zumindest zwei Generatoren (11) umfasst,
wobei die Generatoren (11) direkt mit der Antriebswelle (8) durch ein Kopplungssystem verbunden sind, das ein festes Übersetzungsverhältnis zwischen der Antriebswelle (8) und einer Riemenscheibe der Generatoren (11) aufweist, und
wobei das Kopplungssystem ein Riemenantrieb (12) ist,
**dadurch gekennzeichnet, dass** jeder der Generatoren (11) über eine Halterung (13) am Rahmen (3) befestigt ist, welche Halterung (13) den Generator (11) an drei voneinander beabstandeten Punkten hält, um eine Drehbewegung des Motors bezogen auf die Halterung und den Rahmen zu verhindern.

2. Das Fahrzeug nach Anspruch 1, wobei das Energieerzeugungssystem (10) dem Motor (6) nachgelagert und dem Paar Antriebsräder (4) vorgelagert ausgebildet ist.

3. Das Fahrzeug nach Anspruch 1 oder 2, wobei die Generatoren (11) symmetrisch, bezogen auf eine Achse der Antriebswelle (8), ausgebildet sind.

4. Das Fahrzeug nach Anspruch 1, 2 oder 3, wobei die Anzahl an Generatoren (11) ein Vielfaches von Zwei ist.

5. Das Fahrzeug nach einem der vorherigen Ansprüche, wobei der Riemenantrieb (12) ein Zahnriemenantrieb ist, der zwischen der Riemenscheibe der Generatoren (11) und einer um die Antriebswelle (8) herum angeordneten Hülse (14) ausgebildet ist,
wobei der Durchmesser der Hülse (14) derart ist, dass er ein vorbestimmtes Übersetzungsverhältnis mit der Riemenscheibe der Generatoren (11) vorgibt.

6. Das Fahrzeug nach einem der vorherigen Ansprüche, wobei das Energieerzeugungssystem (10) eine Abdeckung umfasst, die eingerichtet ist, eine Verunreinigung der Generatoren (11) und des Riemenantriebs (12) zu vermeiden.

## Revendications

1. Véhicule (1) comprenant un moteur (6), un châssis (3) et au moins une paire de roues (4) motrices portées par le châssis (3) et couplées mécaniquement au moyen d'un arbre de transmission (8) audit moteur (6), ledit véhicule (1) comprenant un système de production (10) d'énergie couplé mécaniquement audit arbre de transmission (8) pour produire de l'énergie électrique en utilisant l'énergie de rotation dudit arbre de transmission (8),
dans lequel ledit système de production (10) d'énergie comprend au moins deux alternateurs (11),
dans lequel lesdits alternateurs (11) sont couplés directement audit arbre de transmission (8) au moyen d'un système de couplage qui a un rapport de transmission fixe entre l'arbre de transmission (8) et une poulie desdits alternateurs (11),
dans lequel ledit système de couplage est une transmission par courroie (12),
**caractérisé en ce que** chaque dit alternateur (11) est fixé audit châssis par un support (13), dans lequel ledit support (13) porte ledit alternateur (11) en trois points espacés les uns des autres, empêchant un mouvement de rotation du moteur par rapport au support et au châssis.

2. Véhicule selon la revendication 1, dans lequel ledit système de production (10) d'énergie est agencé en aval du moteur (6) et en amont de ladite paire de roues (4) .

3. Véhicule selon la revendication 1 ou 2, dans lequel lesdits alternateurs (11) sont agencés d'une manière symétrique par rapport à un axe dudit arbre de transmission (8).

4. Véhicule selon la revendication 1, 2 ou 3, dans lequel le nombre desdits alternateurs (11) est un multiple de deux.

5. Véhicule selon l'une quelconque des revendications précédentes, dans lequel ladite transmission par courroie (12) est une transmission par courroie crantée mise en œuvre entre la poulie desdits alternateurs (11) et une chemise (14) fixée autour dudit arbre de transmission (8) et d'un diamètre tel qu'elle établit un rapport de transmission prédéfini avec la poulie desdits alternateurs (11).

6. Véhicule selon l'une quelconque des revendications précédentes, dans lequel ledit système de production (10) comprend un cache configuré pour empêcher une contamination desdits alternateurs (11) et de ladite transmission par courroie (12).
